# EUROPÄISCHE PATENTSCHRIFT

(11) **EP 2 587 182 B1**
(45) Veröffentlichungstag und Bekanntmachung des Hinweises auf die Patenterteilung: **14.08.2019**
(21) Anmeldenummer: 12190358.7
(22) Anmeldetag: 29.10.2012
(51) Int. Cl.: E06B 9/30, E06B 9/36, E06B 9/264, E06B 9/386, E06B 9/327, E06B 9/24, F24S 10/90, F24S 20/63, F24S 20/00

(54) **Sonnenschutzvorrichtung**
Sun protection device
Dispositif de protection solaire

(30) Priorität: 31.10.2011 DE 102011085502
(43) Veröffentlichungstag der Anmeldung: 01.05.2013
(73) Patentinhaber: Fraunhofer-Gesellschaft zur Förderung der angewandten Forschung e.V., 80686 München (DE)
(72) Erfinder: Maurer, Christoph, 79106 Freiburg (DE); Hermann, Michael, 79100 Freiburg (DE); Di Lauro, Paolo, 79279 Vörstetten (DE); Kuhn, Tilmann, 79856 Hinterzarten (DE); Bauch, Maximilian, 71083 Herrenberg (DE)
(74) Vertreter: Friese Goeden Patentanwälte PartGmbB

(56) Entgegenhaltungen:
- WO-A2-2010/012832
- WO-A2-2011/074862
- DE-A1-102006 000 668
- DE-U1- 29 710 564
- JP-A- H0 235 186

## Beschreibung

Die Erfindung betrifft eine Sonnenschutzvorrichtung mit einem Behang aus mehreren beabstandeten Lamellen, welche in Führungsschienen mittels zugeordneter Befestigungsvorrichtungen gehalten sind. Sonnenschutzvorrichtungen der eingangs genannten Art können zur Beschattung von Fensteröffnungen oder Glasfassaden von Gebäuden eingesetzt werden.

Aus der DE 297 10 564 U1 ist eine Sonnenschutzvorrichtung der eingangs genannten Art bekannt. Diese bekannte Sonnenschutzvorrichtung weist fluiddurchströmte Lamellen auf. Sofern diese Sonnenschutzvorrichtung zur Beschattung des Innenraumes eines Gebäudes verwendet wird, heizt sich gleichzeitig das Fluid durch die solarthermische Strahlung auf. Das aufgeheizte Fluid kann dann einem Wärmetauscher zugeführt und als Heizenergie oder zur Brauchwassererwärmung verwendet werden.

Diese bekannte Sonnenschutzvorrichtung weist jedoch den Nachteil auf, dass aufgrund der Vielzahl notwendiger Leitungen die Stapelbarkeit der Lamellen nur noch eingeschränkt gegeben ist. Somit kann die Sonnenschutzvorrichtung nicht mehr vollständig von der Fensteröffnung bzw. der Fassade entfernt werden. Der Ausblick aus dem Fenster ist dadurch permanent behindert. Darüber hinaus ist die Vielzahl fluiddichter Verbindungen an einem Gebäude fehleranfällig und aufwändig, so dass mit hohem Wartungsaufwand oder längeren Ausfallzeiten der solarthermischen Energiegewinnung gerechnet werden muss.

Aus der DE 10 2006 000668 A1 ist eine weitere Sonnenschutzvorrichtung der eingangs genannten Art bekannt.

Ausgehend von diesem Stand der Technik liegt der Erfindung somit die Aufgabe zugrunde, eine Sonnenschutzvorrichtung zu schaffen, welche einerseits zur Beschattung von Fensteröffnungen oder Glasfassaden verwendet werden kann und dabei gleichzeitig die solarthermische Energiegewinnung ermöglicht.

Die Aufgabe wird durch eine Sonnenschutzvorrichtung gemäß Anspruch 1 gelöst.

Erfindungsgemäß wird eine Sonnenschutzvorrichtung mit einem Behang aus mehreren beabstandeten Lamellen vorgeschlagen. In einigen Ausführungsformen der Erfindung können die Lamellen aus einem Metallblech gefertigt sein, beispielsweise aus Aluminium. Die Lamellen können einen geraden oder einen gekrümmten Querschnitt aufweisen. In einigen Ausführungsformen der Erfindung können die Lamellen eine komplexe Form aufweisen, d.h. der Querschnitt ist aus mehreren konkaven und/oder konvexen und/oder unterschiedlich zur Fassade geneigten Teilflächen zusammengesetzt. In einigen Ausführungsformen der Erfindung können die Lamellen zur besseren Wärmeleitung und/oder Speicherung mit einem Phasenwechselmaterial oder einem Fluid gefüllt sein. Die Lamellen können an der Fassade bzw. vor der Fensteröffnung horizontal oder vertikal oder in einem anderen Winkel angeordnet sein.

Erfindungsgemäß wird vorgeschlagen, die von den Lamellen bei Sonneneinstrahlung aufgenommene thermische Energie über zumindest eine Heat-Pipe auf zumindest einen feststehenden Teil des Gebäudes, beispielsweise zumindest eine, mit dem Gebäude verbundene Führungsschiene zu übertragen. Auf diese Weise wird eine Vielzahl fluiddichter Verbindungen zwischen den Lamellen und dem Gebäude vermieden. Die thermische Anbindung über zumindest eine Heat-Pipe kann universell für flüssigkeitsgefüllte Lamellen oder Festkörperlamellen verwendet werden. Auch im Falle einer fluidgefüllten Lamelle findet nämlich über die Heat-Pipe lediglich ein Austausch von Wärmeenergie statt, nicht jedoch ein Austausch des wärmetragenden Fluides.

Unter einer Heat-Pipe im Sinne der vorliegende Erfindung wird ein rohrförmiges Element mit einem ersten Ende und einem zweiten Ende verstanden. Innerhalb des Rohres befindet sich ein Arbeitsfluid, beispielsweise Wasser, Ethanol, Aceton, Glykol oder eine Mischung dieser Flüssigkeiten. Selbstverständlich können auch andere als die hier genannten Flüssigkeiten verwendet werden. Aufgrund des im Inneren des Rohres abgesenkten Druckes führt eine Wärmezufuhr an einem Ende der Heat-Pipe zum Verdampfen des Fluides. Dieses wird nachfolgend an das andere Ende der Heat-Pipe transportiert und kondensiert dort. Auf diese Weise wird die Wärme vom ersten Ende zum zweiten Ende transportiert. Im Inneren des Rohres befindet sich weiterhin ein Rückströmkanal oder ein Docht, durch welchen das Kondensat vom zweiten Ende zum ersten Ende geführt wird. Dieser Rücktransport des Fluides kann in einigen Ausführungsformen der Erfindung aufgrund von Kapillareffekten erfolgen.

In einigen Ausführungsformen der Erfindung kann das Wärmeabfuhrsystem der Führungsschiene mit einem Wärmetauschergehäuse versehen sein, welches einen Fluidraum begrenzt, in welchem ein Wärmetauscher angeordnet ist. Auf diese Weise kann der Wärmeübergang von der Heat-Pipe zum Wärmetauscher mit geringem thermischen Widerstand erfolgen, so dass die Wärme aus den Lamellen der Sonnenschutzvorrichtung schnell abtransportiert werden kann. Dies führt zu einer vergrößerten Leistung der vorgeschlagenen Sonnenschutzvorrichtung. Der Wärmetauscher kann die aufgenommene Wärme seinerseits an ein Fluid abgeben, welches im Wärmetauschergehäuse zirkuliert. Das Fluid transportiert dann die Wärme zum Ort der Verwendung, beispielsweise zu einer Heizeinrichtung, einem Trockenprozess oder einer Brauchwassererwärmung.

In einigen Ausführungsformen der Erfindung kann der Wärmetauscher eine Bodenplatte mit einer ersten Seite und einer zweiten Seite aufweisen, wobei die erste Seite dazu eingerichtet ist, mit der Heat-Pipe verbunden zu werden und die zweite Seite zumindest eine Kühlrippe trägt, welche in den Fluidraum hineinragt. Dies verbessert die Wärmeabgabe des Wärmetauschers.

In einigen Ausführungsformen der Erfindung erstreckt sich die Kühlrippe parallel zur Strömungsrichtung des Fluides, so dass ein geringer Strömungswiderstand erreicht wird.

Erfindungsgemäß ist die Heat-Pipe über einen Kondensatoradapter mit dem Wärmeabfuhrsystem gekoppelt . In einigen Ausführungsformen der Erfindung kann der Kondensatoradapter ein Material mit guter Wärmeleitfähigkeit enthalten oder daraus bestehen, beispielsweise Aluminium oder Kupfer. Die Heat-Pipe und der Kondensatoradapter können über einen Presssitz, eine Klebung, eine Schweißverbindung oder eine Lötverbindung miteinander verbunden sein. In einigen Ausführungsformen der Erfindung kann die Heat-Pipe und die Lamelle und/oder der Kondensatoradapter aus einem Stück gefertigt sein, beispielsweise durch Pressen, Rollformen oder Fräsen. In diesem Fall kann die Heat-Pipe nach dem Formen der Lamelle bzw. des Kondensatoradapters befüllt werden. Auf diese Weise wird eine gute Wärmeübertragung vom zweiten Ende der Heat-Pipe auf den Kondensatoradapter ermöglicht. Der Kondensatoradapter kann seinerseits über eine Wärmeaustauschfläche mit dem Wärmeabfuhrsystem bzw. dem Wärmetauscher des Wärmeabfuhrsystems verbunden sein. Durch Verwendung eines Kondensatoradapters kann die dem Wärmeübergang dienende Fläche vergrößert und der Wärmeübergangswiderstand verringert werden. Dadurch wird die nutzbare thermische Leistung vergrößert.

In einigen Ausführungsformen der Erfindung kann der Kondensatoradapter eine Mehrzahl von Kontaktfingern aufweisen, welche beabstandet zueinander angeordnet sind, wobei korrespondierende Kontaktfinger des Wärmetauschers in die Zwischenräume zwischen den Kontaktfingern des Kondensatoradapters eingreifen. In dieser Ausführungsform des Wärmetauschers bzw. des Kondensatoradapters steht eine Mehrzahl von Kontaktflächen für die Wärmeübertragung zur Verfügung. Dies erlaubt einen geringeren Wärmewiderstand bzw. eine größere übertragbare thermische Leistung. Auf diese Weise ist die Erfindung auch für Gebiete mit großer Sonneneinstrahlung bzw. großflächige Lamellen geeignet, welche hohe thermische Leistungen generieren können.

In einigen Ausführungsformen der Erfindung kann die Kontaktfläche zwischen dem Kondensatoradapter und dem Wärmetauscher mit einem elastischen Material ausgestattet werden. Ein elastisches und dennoch wärmeleitendes Material kann Unebenheiten bzw. Fertigungstoleranzen zwischen den Kontaktflächen ausgleichen, so dass die thermische Anbindung zwischen der Lamelle und dem Wärmeabfuhrsystem verbessert wird.

Erfindungsgemäß weist die Führungsschiene einen Anpressrahmen auf, mit welchem eine axiale Kraft auf die Heat-Pipe bzw. den Kondensatoradapter ausgeübt werden kann. Auf diese Weise kann der Anpressdruck zwischen der Befestigungsvorrichtung der Lamelle und dem Wärmeabfuhrsystem der Führungsschiene variiert werden. Dies erlaubt einerseits ein einfaches Bewegen der Lamellen in der Führungsschiene und einen geringen Wärmeübertrag bei geringem bzw. fehlendem Anpressdruck. Andrerseits erlaubt die Erfindung einen guten Wärmeübergang zwischen den Lamellen und dem Wärmeabfuhrsystem bei geringer oder fehlender Beweglichkeit der Lamellen, wenn die Sonnenschutzvorrichtung abgesenkt wurde und ein größerer Anpressdruck aufgebracht wird. In dieser Position kann die Vorrichtung zur Beschattung und/oder Solarenergiegewinnung eingesetzt werden. Somit kann bei einem Überangebot thermischer Energie durch Lösen des Anpressdruckes der Wärmeübergang zwischen der Lamelle und dem Wärmeabfuhrsystem reduziert werden. Auf diese Weise kann die Sonnenschutzvorrichtung in an sich bekannter Weise zur Beschattung eingesetzt werden, ohne gleichzeitig solarthermische Energie zu erzeugen. Somit können beide Funktionen der Sonnenschutzvorrichtung unabhängig voneinander ein- bzw. ausgeschaltet werden.

In einigen Ausführungsformen der Erfindung kann der Anpressrahmen über zumindest ein Hubelement bewegbar sein. Das Hubelement kann mechanisch, beispielsweise über Klemmhebel oder Bowdenzüge bewegt werden. Alternativ kann das Hubelement elektrisch, hydraulisch oder pneumatisch geschaltet werden, um auf diese Weise den Anpressdruck zwischen Führungsschiene und Befestigungsvorrichtung bzw. zwischen Wärmetauscher und Heat-Pipe automatisiert an den jeweiligen Betriebszustand der Sonnenschutzvorrichtung bzw. der solarthermischen Erwärmung angepasst werden.

In einigen Ausführungsformen der Erfindung kann der Anpressrahmen über zumindest ein Federelement bewegbar sein. Dies erlaubt, den Anpressrahmen in einer vordefinierten Stellung zu halten, entweder in der Kontaktstellung von Befestigungselement und Führungsschiene, so dass thermische Energie ohne die Zufuhr von Hilfsenergie übertragen werden kann oder in der gelösten Stellung, so dass die Sonnenschutzvorrichtung jederzeit vom Benutzer auf- bzw. abgelassen werden kann und ein Überangebot thermischer Energie im Wärmetauscher vermieden wird. Der jeweils andere Betriebszustand kann dann über das Hubelement gegen die Federkraft angesteuert werden.

In einigen Ausführungsformen der Erfindung kann der Kondensatoradapter in einer Isolierhülse aufgenommen sein, welche einen ersten Längsabschnitt mit einem ersten Querschnitt und einem zweiten Längsabschnitt mit einem zweiten Querschnitt aufweist, wobei der erste Längsabschnitt eine zylindrische Außenkontur mit einem ersten Radius aufweist und der zweite Längsabschnitt eine zylindrische Außenkontur mit einem zweiten Radius und zumindest eine Abplattung aufweist. Die Isolierhülse vermindert den Wärmeübergang von der Heat-Pipe bzw. dem Kondensatoradapter in die Befestigungsvorrichtung oder die Führungsschiene und vergrößert damit den Anteil der Nutzenergie. Hierzu kann die Isolierhülse in einigen Ausführungsformen der Erfindung aus einem Polymer bestehen bzw. ein solches enthalten, beispielsweise Polyetherimid, Polyetherketon oder Polychlorotrifluorethylen. In einigen Ausführungsformen der Erfindung kann die Isolierhülse aus einer Keramik bestehen bzw. eine solche enthalten. Die zylindrische Außenkontur der Isolierhülse erlaubt es, die Isolierhülse zusammen mit dem Kondensatoradapter und der Heat-Pipe in der Führungsschiene zu drehen, so dass der Anstellwinkel der Lamellen der Sonnenschutzvorrichtung vom Benutzer oder automatisiert entsprechend der gewünschten Abschattung, dem maximalen solarthermischen Gewinn, dem visuellen Komfort oder dem thermischen Komfort eingestellt werden kann. Die Abplattung kann entweder an der Ober- oder der Unterseite oder beidseitig angeordnet sein, wenn die Lamelle in etwa waagerecht ausgerichtet ist. Auf diese Weise wird Bauraum eingespart und die Stapelbarkeit der Lamelle verbessert. Somit kann die Sonnenschutzvorrichtung vollständig von der Fensteröffnung oder der Fassade entfernt und in an sich bekannter Weise in einen Kasten eingefahren werden.

In einigen Ausführungsformen der Erfindung kann der Kondensatoradapter in einer Isolierhülse aufgenommen sein, welche einen ersten Längsabschnitt mit einem ersten Querschnitt und einen zweiten Längsabschnitt mit einem zweiten Querschnitt aufweist, wobei der erste Längsabschnitt eine zylindrische Außenkontur mit einem ersten Radius und zumindest eine Abplattung aufweist, und der zweite Längsabschnitt eine polygonale Außenkontur aufweist. In einigen Ausführungsformen der Erfindung kann die polygonale Außenkontur rechteckig sein. Eine solchermaßen ausgestaltete Isolierhülse kann formschlüssig in der Führungsschiene geführt werden, ohne dass diese unbeabsichtigt verdreht wird. Eine gewünschte Drehbarkeit der Lamellen kann somit durch eine drehbare Aufnahme der Heat-Pipe in der Befestigungsvorrichtung oder an der Lamelle realisiert werden. Alternativ kann die Heat-Pipe auch fest verbunden sein, wenn eine Drehbarkeit der Lamelle nicht erwünscht ist.

In einigen Ausführungsformen der Erfindung kann auf zumindest einer Lamelle eine photovoltaische Zelle angeordnet sein und sowohl die Isolierhülse als auch der Anpressrahmen mit zumindest einem elektrischen Kontaktelement versehen sein. Diese Weiterbildung der Erfindung ermöglicht die simultane Bereitstellung von Wärmeenergie und elektrischer Energie. In einigen Ausführungsformen der Erfindung kann der kurzwellige Teil des Sonnenspektrums von zumindest einer photovoltaischen Zelle absorbiert werden und die langwellige Strahlung, welche die photovoltaische Zelle durchdringt, zur thermischen Energieversorgung verwendet werden.

In einigen Ausführungsformen der Erfindung kann das elektrische Kontaktelement zumindest einen gefederten Kontakt umfassen, welcher axiale Abstandsänderungen und/oder Form- und/oder Lagetoleranzen ausgleichen kann.

In einigen Ausführungsformen der Erfindung kann ein elektrisches Kontaktelement ein Schleifringkontakt sein, so dass der elektrische Kontakt auch bei Veränderung des Anstellwinkels der Lamelle und daraus resultierender Drehung der Isolierhülse erhalten bleibt.

In einigen Ausführungsformen der Erfindung kann zumindest eine Lamelle beidseitig die bei Sonneneinstrahlung aufgenommene thermische Energie über zumindest zwei Heat-Pipes auf jeweils zugeordnete, mit dem Gebäude verbundene Führungsschienen übertragen. In diesem Fall können sich die Führungsschienen an zwei gegenüberliegenden Seiten einer Fensteröffnung befinden, beispielsweise rechts und links oder oben und unten. Durch die beidseitige Wärmeabfuhr kann jede einzelne Befestigungsvorrichtung kleiner ausgeführt sein, wodurch die Stapelbarkeit der Lamellen verbessert wird.

In einigen Ausführungsformen der Erfindung kann zumindest eine Lamelle zumindest einseitig mit einer spektral selektiven Beschichtung versehen sein. Eine solche Beschichtung kann Strahlungsverluste minimieren.

In einigen Ausführungsformen der Erfindung kann die Sonnenschutzvorrichtung zwischen zumindest zwei Scheiben eingebracht sein. Dies kann eine leichte Reinigung der Fassade ermöglichen und/oder die Verschmutzung der Lamellen der Sonnenschutzvorrichtung verhindern und/oder die Wärmeverluste verringern und damit den Anteil der Nutzenergie vergrößern. Die Scheiben können opak, transluzent oder transparent sein.

In einigen Ausführungsformen der Erfindung kann zwischen den Scheiben ein Schutzgas oder Isolationsvakuum eingebracht sein. Hierdurch wird die Wärmedämmung gesteigert bzw. der Wärmeeintrag in das Gebäude weiter verringert.

In einigen Ausführungsformen der Erfindung kann in die Lamelle zumindest ein Rohr aufgenommen sein, dessen Innendurchmesser in etwa dem Außendurchmesser der Heat-Pipe entspricht. Bei dieser Ausführungsform der Erfindung kann die Heat-Pipe in das Rohr der Lamelle eingeführt sein. In Abhängigkeit der Maß- und Formtoleranzen kann die Verbindung als Presssitz ausgebildet sein, welcher eine gute thermische Anbindung ermöglicht. In anderen Ausführungsformen der Erfindung kann die Heat-Pipe leicht im Rohr gleiten und damit drehbar gelagert sein, so dass eine Änderung des Anstellwinkels der Lamelle ermöglicht wird.

Nachfolgend soll die Erfindung anhand von Figuren näher erläutert werden. Dabei zeigt:
- Figur 1: eine schematische Darstellung der erfindungsgemäßen Sonnenschutzvorrichtung.
- Figur 2: zeigt ein Detail der Führungsschiene.
- Figur 3: zeigt eine Seitenansicht der Sonnenschutzvorrichtung.
- Figur 4: zeigt den in Figur 3 dargestellten Schnitt A-A.
- Figur 5: zeigt den in Figur 3 dargestellten Schnitt C-C.
- Figur 6: zeigt den in Figur 3 dargestellten Schnitt K-K.
- Figur 7: zeigt eine Isolierhülse gemäß einer ersten Ausführungsform.
- Figur 8: zeigt eine Isolierhülse gemäß einer zweiten Ausführungsform.
- Figur 9: zeigt schematisch das Zusammenwirken des Wärmeabfuhrsystems mit der Heat-Pipe gemäß einer ersten Ausführungsform.
- Figur 10: zeigt schematisch das Zusammenwirken der Wärmeabfuhreinrichtung mit der Heat-Pipe gemäß einer zweiten Ausführungsform.
- Figur 11: illustriert die elektrische Anbindung einer photovoltaischen Zelle.

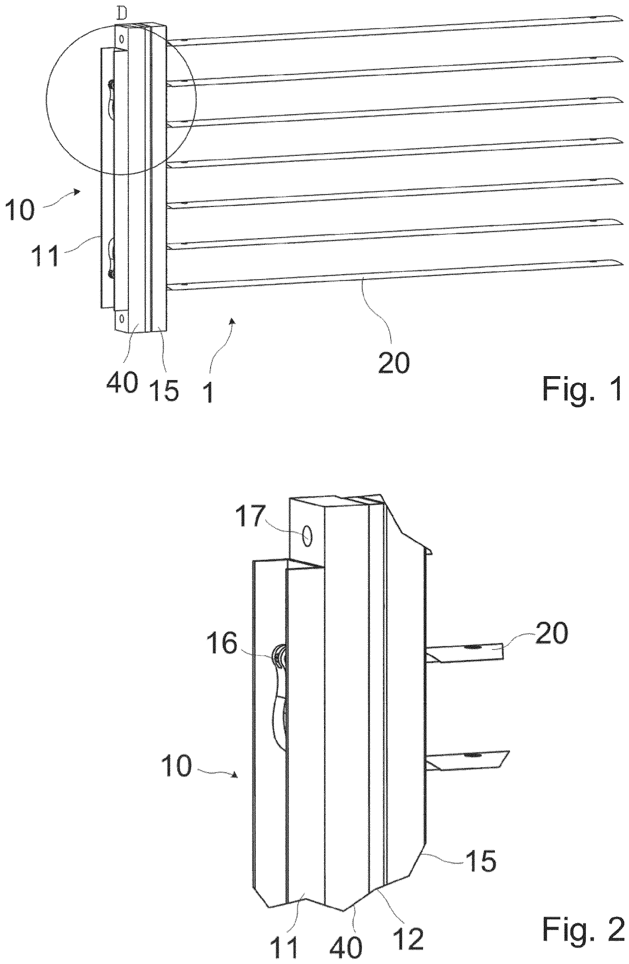

Figur 1 zeigt die Ansicht einer erfindungsgemäßen Sonnenschutzvorrichtung. Die in Figur 1 dargestellte Sonnenschutzvorrichtung umfasst eine Mehrzahl von Lamellen 20, welche in etwa horizontal vor einer Fensteröffnung bzw. einer Fassade angeordnet werden können. Die Lamellen 20 sind beidseitig in einer etwa orthogonal zur Richtung der Lamellen verlaufenden Führungsschiene 10 aufgenommen. Die Lamellen können in der Führungsschiene 10 verschoben werden, beispielsweise mit einem Seilzug. Auf diese Weise können die Lamellen bei Nichtgebrauch zu einem Ende der Führungsschiene verfahren werden, so dass diese den Ausblick aus der Fensteröffnung nicht stören.

Weiterhin können die Lamellen um ihre Längsachse schwenkbar sein, so dass der Ausblick und die Sonneneinstrahlung in weiten Grenzen eingestellt werden können.

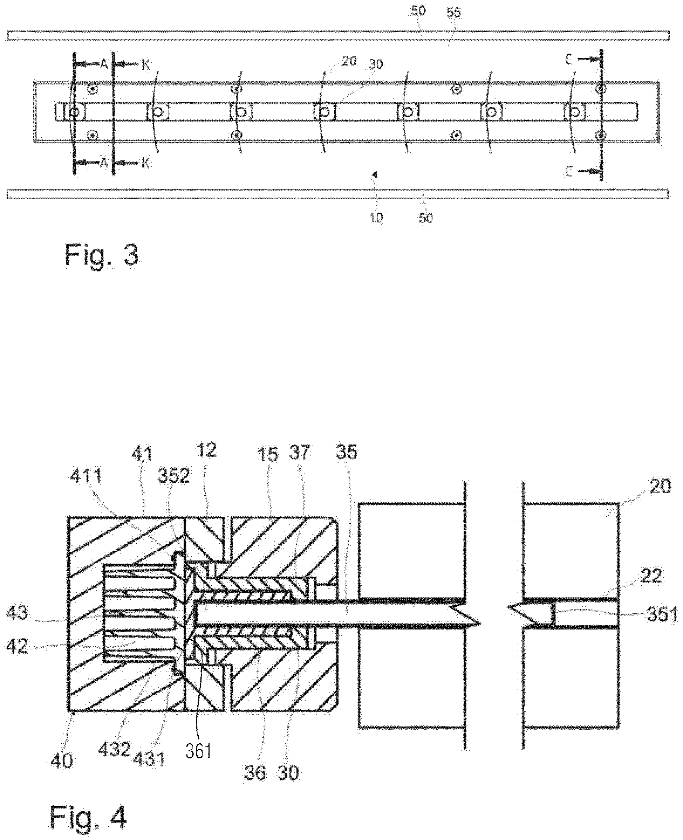

Ein Detail der Führungsschiene 10, welches in Figur 1 mit einem Kreis markiert ist, ist in Figur 2 näher dargestellt. Aus Figur 2 ist ersichtlich, dass die Führungsschiene 10 aus mehreren in etwa parallel verlaufenden Komponenten zusammengesetzt ist. Den zentralen Teil der Führungsschiene 10 bildet das Wärmeabfuhrsystem 40. Auf der inneren, den Lamellen 20 zugewandten Seite des Wärmeabfuhrsystems 40 befindet sich der Anpressrahmen 15, mit dessen Hilfe ein thermischer Kontakt zwischen den Lamellen und dem Wärmeabfuhrsystem hergestellt oder gelöst werden kann. Der Aufbau und die Wirkungsweise der Führungsschiene 10 werden nachfolgend anhand der Schnittdarstellungen in den Figuren 4 bis 6 näher erläutert.

Zwischen dem Anpressrahmen 15 und dem Wärmeabfuhrsystem 40 ist ein Führungsrahmen 12 angeordnet, welcher eine Zwangsführung der Lamellen 20 entlang der Fensteröffnung bewirkt. Auf der äußeren, der Fensteröffnung abgewandten Seite des Wärmeabfuhrsystems ist schließlich der Klemmrahmen 11 angeordnet. Der Klemmrahmen 11 wird durch ein Hubelement 16 bewegt. Das Hubelement 16 kann beispielsweise in Form eines Exzenters ausgeführt sein, so dass der Benutzer durch Umlegen eines Hebels eine Verschiebung des Klemmrahmens 11 und damit eine Anpresskraft zwischen der Befestigungsvorrichtung und der Wärmeaustauschvorrichtung bewirken kann. In anderen Ausführungsformen der Erfindung kann das Hubelement 16 elektrisch, hydraulisch oder pneumatisch bedient werden, so dass dieses einer elektrischen Ansteuerung durch eine zugeordnete Regeleinrichtung zugänglich ist. Die Bewegung des Klemmrahmens 11 wird auf den Anpressrahmen 15 übertragen, wie nachfolgend anhand der Figuren 4 bis 6 näher erläutert wird.

Figur 3 zeigt eine Seitenansicht auf die Führungsschiene 10. Dargestellt ist eine Mehrzahl von Lamellen 20 mit jeweils zugeordneten Befestigungsvorrichtungen 30, welche entlang der Führungsschiene 10 verschiebbar gelagert sind, um die Lamellen 20 von einer Aufbewahrungs- in eine Funktionsstellung zu bringen. Wie in Figur 3 ersichtlich ist, handelt es sich bei den Lamellen 20 um gebogene Elemente aus einem Metall oder einer Legierung mit guter Wärmeleitfähigkeit, beispielsweise einer Aluminium- oder Kupferlegierung. Die Lamellen 20 können eine konvexe Ober- und eine konkave Unterseite aufweisen oder eine komplexe Form mit mehreren, in unterschiedliche Richtungen geneigten oder gekrümmten Teilflächen aufweisen.

Weiterhin sind in Figur 3 zwei optionale Scheiben 50 dargestellt, welche einen Raum 55 einschließen. In einigen Ausführungsformen der Erfindung kann die Sonnenschutzvorrichtung im Inneren des Raumes 55 angeordnet sein. Der Raum 55 kann evakuiert oder mit einem Schutzgas gefüllt sein, beispielsweise einem Edelgas, um den Wärmedurchgang durch die Glasscheiben 50 zu verringern. Daneben können die Scheiben 50 die Verschmutzung der Lamellen 20 reduzieren oder verhindern.

Schließlich ist in Figur 3 die Lage dreier Schnitte A-A, K-K und C-C dargestellt, welche nachfolgend anhand der Figuren 4 bis 6 näher erläutert werden.

Figur 4 zeigt den Schnitt A-A durch eine Lamelle 20 und die zugeordnete Befestigungsvorrichtung 30. An der Lamelle 20 ist ein Rohr 22 angebracht, beispielsweise durch Verpressen, Löten, Kleben oder Schweißen. Auf diese Weise wird ein guter Wärmeübergang von der Lamelle 20 auf das Rohr 22 ermöglicht. Im Inneren des Rohres 22 ist eine Heat-Pipe 35 eingeführt. Um eine Drehbarkeit der Lamelle 20 zu ermöglichen, kann der Außendurchmesser der Heat-Pipe 35 geringfügig, beispielsweise um 0.01 bis 0.1 mm, geringer sein als der Innendurchmesser des Rohres 22. In einigen Ausführungen kann die Heat-Pipe 35 ohne ein Rohr 22 direkt an der Lamelle 20 angebracht werden.

Die Heat-Pipe 35 weist ein erstes Ende 351 auf, welches im Inneren des Rohres 22 angeordnet ist, sowie ein zweites Ende 352, welches im Inneren eines Kondensatoradapters 36 angeordnet ist. Das Innere der Heat-Pipe 35 ist evakuiert und mit einem Fluid gefüllt, welches durch die von der Lamelle 20 zugeführte thermische Energie am ersten Ende 351 verdampft. Das gasförmige Fluid wird nachfolgend zum zweiten Ende 352 transportiert, wo es wieder kondensiert. Hierdurch wird die aufgenommene Wärme an dem Kondensatoradapter 36 abgegeben. In an sich bekannter Weise, beispielsweise durch Kapillarkräfte, wird das verflüssigte Fluid wiederum vom zweiten Ende 352 zum ersten Ende 351 transportiert. Die Heat-Pipe 35 gestattet somit den Transport von Wärme zwischen der Lamelle 20 und dem Kondensatoradapter 36, ohne dass ein Stofftransport von der Lamelle 20 zur Führungsschiene 10 statt findet.

Der Kondensatoradapter 36 ist im Inneren einer Isolierhülse 37 aufgenommen. Die Isolierhülse 37 verhindert, dass Wärmeenergie vom Kondensatoradapter 36 unkontrolliert abgegeben wird. Daneben steht die Isolierhülse 37 in gleitendem Kontakt mit dem Anpressrahmen 15. Die Heat-Pipe wird dabei durch den Schlitz 152 in das Innere des Anpressrahmens 15 eingeführt. Die Isolierhülse 37 ist in einigen Ausführungsformen aus einem selbstschmierenden, temperaturbeständigen Polymer gefertigt, beispielsweise Polyetherimid oder Polyetherketon. Auf diese Weise kann die Isolierhülse 37 leicht im Inneren des Anpressrahmens 15 gleiten, wenn die Lamellen 20 in der Führungsschiene 10 verschoben werden sollen.

Der Kondensatoradapter 36 weist weiterhin eine Stirnseite 361 auf, welche von der Isolierhülse 37 nicht, oder zumindest nicht vollständig bedeckt wird. Die Stirnseite 361 steht in Kontakt zur Stirnseite 431 eines Wärmetauschers 43. In einigen Ausführungsformen der Erfindung können die Stirnseiten 361 und 431 poliert sein, um einen guten Wärmeübergang zu ermöglichen. In anderen Ausführungsformen der Erfindung können verbleibende Rauheiten durch Schmiermittel oder Wärmeleitpasten überbrückt werden. In wiederum einer anderen Ausführungsform der Erfindung kann zumindest eine der Stirnseiten 431 oder 361 mit einem elastischen Material belegt sein, welches einen geringen Wärmewiderstand aufweist und beim Anpressen beider Stirnseiten verbleibende Unebenheiten, Maßtoleranzen und Rauheiten ausgleicht.

Nachdem die Wärme aus der Lamelle 20 über die Heat-Pipe 35 und den Kondensatoradapter 36 an den Wärmetauscher 43 abgegeben wurde, wird diese vom Wärmetauscher 43 an ein Wärmeträgermedium abgeben, welches Teil eines Heizungssystems ist. Als Wärmeträgermedium kann in einigen Ausführungsformen der Erfindung Wasser, Öl, ein Alkohol oder ein anderes, hier nicht genanntes Medium verwendet werden. Das Wärmeträgermedium kann flüssig oder gasförmig sein oder am Wärmetauscher einen Phasenübergang durchlaufen. Um den Wärmetauscher 43 in Kontakt mit dem Wärmeträgermedium zu bringen, ist der Wärmetauscher 43 in ein Wärmetauschergehäuse 41 eingesetzt. Das Wärmetauschergehäuse 41 weist einen Fluidraum 42 auf, in welchen der Wärmetauscher 43 zumindest teilweise eintaucht. in der dargestellten Ausführungsform der Erfindung weist der Wärmetauscher 43 Kühlrippen 432 auf, welche in etwa parallel zur Strömung des Wärmeträgermediums verlaufen. Gleichzeitig ist der Wärmetauscher 43 als Deckel des Wärmetauschergehäuses ausgebildet. Hierzu befindet sich im Wärmetauschergehäuse 41 eine umlaufende Nut 411, in welche ein Dichtungsring, beispielsweise ein O-Ring, eingelegt werden kann. Der O-Ring und der Wärmetauscher 43 werden von Führungsrahmen 12 gehalten, so dass sich ein fluiddichter Abschluss des Fluidraumes 42 ergibt. Die Wärme des im Fluidraum 42 zirkulierenden Wärmeträgermediums kann dann für einen industriellen Trocknungsprozess, die Brauchwassererwärmung, Sorptionskältemaschinen oder die Heizungsunterstützung verwendet werden. Wie aus Figur 2 ersichtlich, weist das Wärmeabfuhrsystem 40 hierzu zwei Zugangsöffnungen 17 am oberen und unteren Ende auf, durch welche das Wärmeträgermedium in das Innere des Wärmetauschergehäuses 41 ein- und austreten kann.

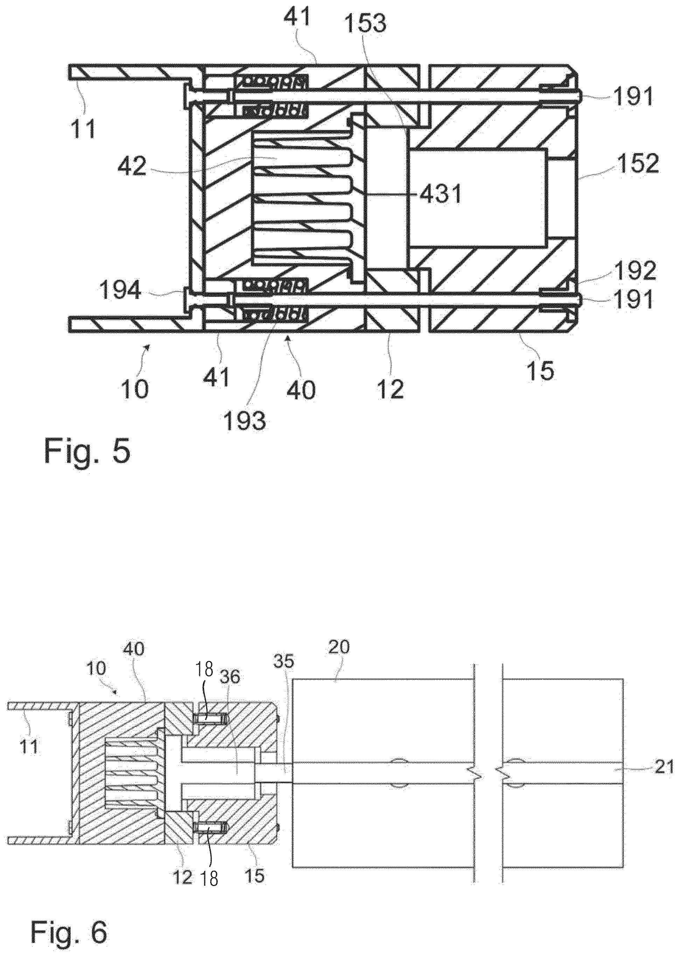

Ein guter Wärmeübergang vom Kondensatoradapter 36 zum Wärmetauscher 43 erfordert einen hohen Anpressdruck bzw. eine große Normalkraft zwischen beiden Bauteilen. Diese kann durch den Anpressrahmen 15 aufgebracht werden, wie anhand von Figur 5 näher erläutert wird.

Figur 5 zeigt den Schnitt C-C, und damit einen Bereich der Führungsschiene 10, in welchem keine Befestigungsvorrichtung 30 angeordnet ist. Wie aus Figur 5 ersichtlich ist, ist der Anpressrahmen 15 über Gewindestangen 191 mit dem Klemmrahmen 11 verbunden. Hierzu weist das Wärmetauschergehäuse 41, der Führungsrahmen 12 und der Anpressrahmen 15 entsprechende Bohrungen auf, in welchen die Gewindestange 191 aufgenommen ist. An ihren Enden ist diese durch Muttern 192 und 194 fixiert. Eine Bewegung des Klemmrahmens 11 führt somit zu einer gleichsinnigen Bewegung des Anpressrahmens 15. Auf diese Weise kann der Anpressrahmen 15 durch das Hubelement 16 beeinflusst werden.

Der Klemmrahmen 15 weist Anlageflächen 153 auf, welche mit der Isolierhülse 37 in Eingriff stehen. Auf diese Weise kann über die Isolierhülse 37 eine Anpresskraft auf den Kondensatoradapter 36 ausgeübt werden. Wenn der Anpressrahmen 15 in die in Figur 5 gezeigte Stellung gebracht wird, ist der von der Stirnseite 431 des Wärmetauschers 43 und der Anpressfläche 153 des Anpressrahmens 15 begrenzte Raum größer als der zweite Längsabschnitt 372 der Isolierhülse, so dass die Befestigungsvorrichtung 30 entlang der Führungsschiene 10 verschoben werden kann. Da in dieser Stellung auch kein großer Anpressdruck zwischen dem Kondensatoradapter 36 und dem Wärmetauscher 43 vorhanden ist, ist auch der Wärmeübergang von der Lamelle 20 zum Wärmeträgermedium in Inneren des Fluidraums 42 nur gering. Somit kann durch Bewegen des Klemmrahmens 11 und der daraus folgenden Bewegung des Anpressrahmens 15 nicht nur das Bewegen der Lamellen 20 ermöglicht werden, sondern zugleich die solarthermische Energiegewinnung beeinflusst werden, indem der Wärmefluss von der Lamelle 20 zum Wärmeträgermedium unterbrochen wird, wenn weniger Wärme verbraucht wird.

Figur 5 zeigt weiterhin Federn 193, welche den Anpressrahmen 15 in eine vorgebbare Stellung bewegen. Sofern die solarthermische Energiegewinnung ohne die Zufuhr von Hilfsenergie vom Hubelement 16 erfolgen soll, können mit den Federn 193 Anpresskräfte auf die Befestigungsvorrichtungen 30 ausgeübt werden. In diesem Fall kann das Betätigungselement 16 zum Lösen der Verbindung eingesetzt werden. In anderen Ausführungsformen der Erfindung können die Federn 193 den Anpressrahmen 15 in die in Figur 5 gezeigte gelöste Stellung bewegen, so dass die Lamellen 20 mit den Befestigungsvorrichtungen 30 jederzeit auf- oder abbewegt oder geschwenkt werden können. Zur solarthermischen Energiegewinnung muss dann der Klemmrahmen 11 über das Hubelement 16 bewegt werden, um den Anpressrahmen 15 gegen die Federkraft der Feder 193 zu bewegen.

Figur 6 zeigt den Schnitt K-K, welcher in Figur 3 eingezeichnet ist. Erkennbar sind zweite Federelemente 18, welche den Anpressrahmen 15 in einem gleichmäßigen Abstand vom Führungsrahmen 12 halten, so dass die Gewindestangen 191 nicht in ihren Bohrungen verkanten und eine zuverlässige Betätigung des Anpressrahmens 15 durch Bewegung des Klemmrahmens 11 erfolgen kann.

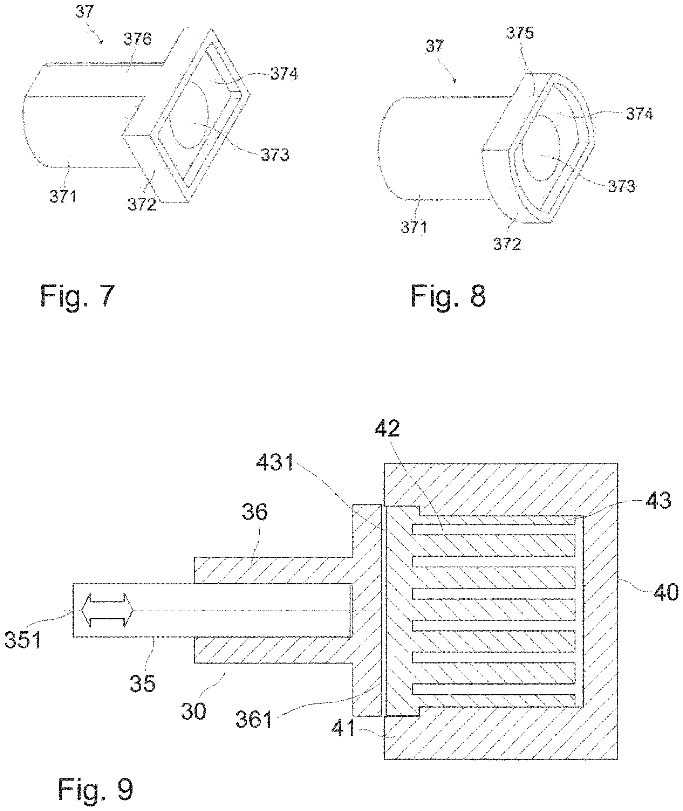

Figur 7 zeigt eine schematische Darstellung einer Ausführungsform einer Isolierhülse 37. Die Isolierhülse 37 weist einen ersten Längsabschnitt 371 und einen zweiten Längsabschnitt 372 auf. Der Längsabschnitt 372 ist dazu vorgesehen, in den durch den Führungsrahmen 12 und den Anpressrahmen 15 begrenzten Raum aufgenommen zu werden. Hierzu weist der zweite Längsabschnitt 372 eine Größe auf, welche in etwa der Innenbreite des Führungsrahmens 12 entspricht. Aufgrund der polygonalen, gemäß dem Ausführungsbeispiel in Figur 7 viereckigen Form wird eine Verdrehsicherung erreicht, so dass die Isolierhülse 37 stets in gleicher Orientierung in der Führungsschiene 10 angeordnet ist.

Der erste Längsabschnitt 371 ist im Innenraum des Anpressrahmens 15 gleitend aufgenommen, so dass der Anpressrahmen 15 axial entlang des ersten Längsabschnittes 371 verschoben werden kann, um eine Anpresskraft auf den zweiten Längsabschnitt 372 auszuüben. Auch der erste Längsabschnitt 371 weist eine Abplattung 376 auf, welche als Verdrehsicherung dienen kann, wenn der Anpressrahmen 15 eine komplementäre Innenkontur aufweist. In anderen Ausführungsformen der Erfindung kann die Abplattung 376 die zum Stapeln der Lamellen benötigte Höhe verringern.

Über die gesamte Länge der Isolierhülse 37 erstreckt sich eine Bohrung 373 zur Aufnahme des Kondensatoradapters und der Heat-Pipe. Der Kondensatoradapter füllt weiterhin den Raum 374 im zweiten Längsabschnitt aus, so dass ein größerer Querschnitt zum Wärmeübergang zum Wärmetauscher 43 zur Verfügung steht.

Die Isolierhülse 37 gemäß Figur 7 findet insbesondere dort Anwendung, wo die Drehbarkeit der Lamellen 20 durch eine drehbare Lagerung der Heat-Pipe 35 in der Lamelle 20 erreicht wird. Weiterhin kann die Isolierhülse 37 dann vorteilhaft eingesetzt werden, wenn eine Drehbarkeit der Lamellen um deren Längsachse 21 nicht erwünscht ist.

Figur 8 zeigt eine weitere Ausführungsform einer Isolierhülse 37. Gleiche Bauteile der Isolierhülse 37 sind mit gleichen Bezugszeichen versehen, so dass nur die wesentlichen Unterschiede dargestellt werden.

Die Ausführungsform gemäß Figur 8 weist einen ersten Längsabschnitt 371 mit einem zylindrischen Querschnitt auf. Auch der zweite Längsabschnitt 372 weist einen im Wesentlichen zylindrischen Querschnitt auf, wobei an zwei gegenüberliegenden Seiten Abplattungen 375 angebracht sind, welche sich gedanklich als Kreisabschnitt des runden Querschnittes erfassen lassen. Die runden Außenkonturen der Isolierhülse 37 gestatten eine Verdrehbarkeit der Isolierhülse im Inneren des Anpressrahmens 15 bzw. im Führungsrahmen 12. Hierdurch kann die Lamelle 20 auch dann um ihre Längsachse 21 gedreht werden, wenn die Heat-Pipe 35 eine feste Verbindung zur Lamelle 20 aufweist, beispielsweise durch Pressen oder Löten. Eine solche Verbindung weist einen verbesserten Wärmeübergang auf. Die Abplattungen 375 sind optional und erleichtern die Stapelbarkeit bzw. reduzieren den von den gestapelten Lamellen benötigten Bauraum in einem Jalousiekasten.

Anhand von Figur 9 wird nochmals der Wärmeübergang von der Heat-Pipe 35 über den Kondensatoradapter 36 auf den Wärmetauscher 43 erläutert. Der Kondensatoradapter 36 vergrößert dabei mit seiner Stirnfläche 361 die für den Wärmeübergang zur Verfügung stehende Kontaktfläche. Diese steht in einem engen Kontakt zur Stirnseite 431 des Wärmetauschers 43, wenn ein Wärmeübergang zum Fluidraum 42 gewünscht ist. Um eine leichte Verschiebbarkeit der Lamellen entlang der Führungsschiene 10 zu ermöglichen oder um den Wärmefluss vorübergehend zu verringern bzw. ganz zu unterbinden, kann die Stirnseite 361 des Kondensatoradapters 36 von der Stirnseite 431 des Wärmetauschers 43 abgehoben werden, wie anhand des Doppelpfeiles der Heat-Pipe 35 illustriert wird.

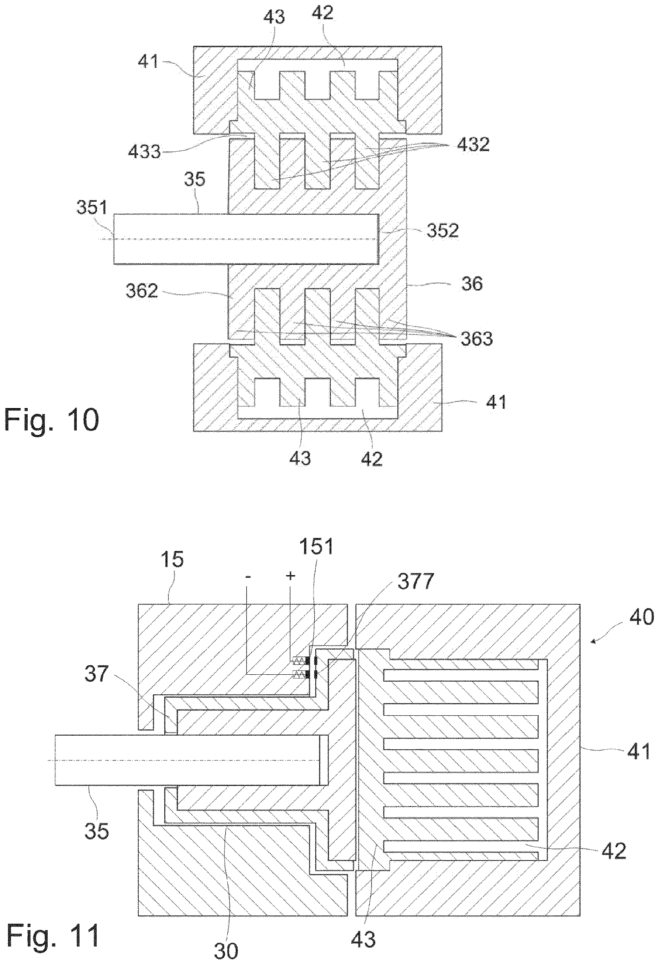

Figur 10 zeigt eine alternative Ausführungsform der Erfindung, welche eine bessere Wärmeübertragung bzw. größere übertragbare Leistungen ermöglicht. Hierzu wird die einzelne Stirnseite 361 durch rippenförmige Ausgestaltung des Kondensatoradapters 36 zu einer Mehrzahl von Kontaktfingern 362 erweitert. Die Kontaktfinger 362 sind durch Zwischenräume 363 voneinander beabstandet.

Im Betrieb der Vorrichtung greift in die Zwischenräume 363 jeweils ein Kontaktfinger 432 des Wärmetauschers 43 ein. Auch die Kontaktfinger 432 des Wärmetauschers 43 sind durch Zwischenräume 433 voneinander beabstandet. Durch axiales Verschieben der Heat-Pipe 35 und/oder des Kondensatoradapters 36 kann der Anpressdruck und damit der Wärmeübergang zwischen den Kontaktfingern 362 und den Kontaktfingern 432 eingestellt werden. Gleichzzeitig beeinflusst die Anpresskraft die Reibungskraft zwischen dem Kondensatoradapter 36 und dem Wärmetauscher 43, so dass die Lamelle an einer vorgebbaren Position der Führungsschiene 10 gehalten werden kann.

Nach dem Wärmeübergang auf den Kühlkörper 43 wird die Wärme an ein Trägermedium im Fluidraum 42 des Wärmetauschergehäuses 41 abgegeben, wie vorgestehend beschrieben.

Figur 11 zeigt eine weitere Ausgestaltung der vorliegenden Erfindung. Auch in Figur 11 bezeichnen gleiche Bezugszeichen gleiche Bauteile, so dass sich die nachfolgende Beschreibung auf die Unterschiede zu den vorhergehenden Ausführungsformen beschränkt.

Figur 11 zeigt ein Wärmeabfuhrsystem 40, einen Anpressrahmen 15 und eine Befestigungsvorrichtung 30 mit einer darin angeordneten Heat-Pipe 35. Sofern die Lamelle nicht nur zur solarthermischen Energienutzung vorgesehen ist, sondern zusätzlich eine photovoltaische Zelle trägt, stellt sich das zusätzliche Problem, dass die elektrische Energie abgeführt werden muss. Hierzu dienen elektrische Kontakte 377 und 151 im Anpressrahmen 15 bzw. in der Isolierhülse 37. Die Kontakte 377 können beispielsweise als Schleifring ausgeführt werden, so dass der Kontakt weiterhin besteht, wenn die Lamelle mit der Isolierhülse 37 gedreht wird, um die Lamelle nach dem Sonnenstand auszurichten. Die Kontaktelemente 151 können bevorzugt federnd gelagert sein, um unterschiedliche Abstände des Anpressrahmens 15 auszugleichen oder um Maß- und/oder Lagetoleranzen der Isolierhülse 37 und der Kontakte 377 auszugleichen. Auf diese Weise ist eine zuverlässige Kontaktierung der Solarzelle möglich, ohne dass bewegte und damit mechanisch beanspruchte Kabelverbindungen erforderlich sind.

Selbstverständlich ist die Erfindung nicht auf die in den Figuren dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus.

## Patentansprüche

1. Sonnenschutzvorrichtung (1) mit einem Behang aus mehreren beabstandeten Lamellen (20), welche in Führungsschienen (10) mittels zugeordneter Befestigungsvorrichtungen (30) gehalten sind, wobei die Befestigungsvorrichtung (30) zumindest eine Heat-Pipe (35) enthält, welche ein erstes Ende (351) und ein zweites Ende (352) aufweist, wobei das erste Ende (351) mit der Lamelle (20) gekoppelt ist und das zweite Ende (352) mit einem Wärmeabfuhrsystem (40) verbindbar ist, welches in der Führungsschiene (10) aufgenommen ist, **dadurch gekennzeichnet, dass** die Befestigungsvorrichtungen (30) entlang der Führungsschiene (10) verschiebbar sind und wobei das zweite Ende (352) der Heatpipe (35) mit einem Kondensatoradapter (36) verbunden ist, über welcher sie mit dem Wärmeabfuhrsystem (40) gekoppelt ist und die Führungsschiene (10) einen Anpressrahmen (15) aufweist, mit welchem eine axiale Kraft auf den Kondensatoradapter (36) ausgeübt werden kann.

2. Sonnenschutzvorrichtung nach Anspruch 1, **dadurch gekennzeichnet, dass** das Wärmeabfuhrsystem (40) mit einem Wärmetauschergehäuse (41) versehen ist, welches einen Fluidraum (42) begrenzt, in welchem ein Wärmetauscher (43) angeordnet ist.

3. Sonnenschutzvorrichtung nach Anspruch 2, **dadurch gekennzeichnet, dass** der Kondensatoradapter (36) mit seiner Stirnseite (361) mit dem Wärmetauscher (43) des Wärmeabfuhrsystems (40) in Kontakt steht.

4. Sonnenschutzvorrichtung nach Anspruch 2, gekennzeichnet, dass der Kondensatoradapter (36) eine Mehrzahl von Kontaktfingern (362) aufweist, welche beabstandet zueinander angeordnet sind, wobei korrespondierende Kontaktfinger (432) des Wärmetauschers (43) in die Zwischenräume (363) zwischen den Kontaktfingern (362) des Kondensatoradapters (36) eingreifen.

5. Sonnenschutzvorrichtung nach einem der Ansprüche 2 bis 4, **dadurch gekennzeichnet, dass** der Wärmetauscher (43) eine Bodenplatte mit einer ersten Seite und einer zweiten Seite aufweisen, wobei die erste Seite dazu eingerichtet ist, mit der Heat-Pipe verbunden zu werden und die zweite Seite zumindest eine Kühlrippe trägt, welche in den Fluidraum hineinragt.

6. Sonnenschutzvorrichtung nach Anspruch 5, gekennzeichnet, dass sich die Kühlrippe parallel zur Strömungsrichtung des Fluides erstreckt.

7. Sonnenschutzvorrichtung nach einem der Ansprüche 1 bis 6, **dadurch gekennzeichnet, dass** die Heat-Pipe (35) axial verschiebbar ist.

8. Sonnenschutzvorrichtung nach einem der Ansprüche 1 bis 7, **dadurch gekennzeichnet, dass** der Anpressrahmen (15) über zumindest ein Hubelement (16) bewegbar ist und/oder der Anpressrahmen über zumindest ein Federelement (193, 18) bewegbar ist.

9. Sonnenschutzvorrichtung nach einem der Ansprüche 1 bis 8, **dadurch gekennzeichnet, dass** der Kondensatoradapter (36) in einer Isolierhülse (37) aufgenommen ist, welche einen ersten Längsabschnitt (371) mit einem ersten Querschnitt und einen zweiten Längsabschnitt (372) mit einem zweiten Querschnitt aufweist, wobei der erste Längsabschnitt (371) eine zylindrische Außenkontur mit einem ersten Radius aufweist und der zweite Längsabschnitt (372) eine zylindrische Außenkontur mit einem zweiten Radius und zumindest einer Abplattung (375) aufweist oder
der erste Längsabschnitt (371) eine zylindrische Außenkontur mit einem ersten Radius und zumindest einer Abplattung (376)aufweist und der zweite Längsabschnitt (372) eine polygonale Außenkontur aufweist.

10. Sonnenschutzvorrichtung nach einem der Ansprüche 1 bis 9, **dadurch gekennzeichnet, dass** die Lamellen (20) in den Befestigungsvorrichtungen (30) um ihre Längsachse (21) schwenkbar sind.

11. Sonnenschutzvorrichtung nach Anspruch 9, **dadurch gekennzeichnet, dass** auf zumindest einer Lamelle (20) eine photovoltaische Zelle angeordnet ist und sowohl die Isolierhülse (37) als auch der Anpressrahmen (15) mit zumindest einem elektrischen Kontaktelement (377, 151) versehen sind.

12. Sonnenschutzvorrichtung nach einem der Ansprüche 1 bis 11, weiterhin enthaltend zwei Scheiben (50), wobei die Sonnenschutzvorrichtung zwischen den Scheiben (50) eingebracht ist.

13. Sonnenschutzvorrichtung nach Anspruch 12, **dadurch gekennzeichnet, dass** zwischen den Scheiben (50) ein Schutzgas oder ein Isolationsvakuum eingebracht ist.

14. Sonnenschutzvorrichtung nach einem der Ansprüche 1 bis 13, **dadurch gekennzeichnet, dass** die Heat-Pipe (35) drehbar in der Lamelle (20) aufgenommen ist.

15. Gebäude mit einer Sonnenschutzvorrichtung nach einem der Ansprüche 1 bis 14.

## Claims

1. Sun protection device (1) comprising a curtain of a plurality of spaced lamellas (20), which are held in guide rails (10) by means of associated fastening elements (30), the fastening element (30) containing at least one heat pipe (35) having a first end (351) and a second end (352), the first end (351) being coupled to the lamella (20) and the second end (352) being connectable to a heat dissipation system (40), which is accommodated in the guide rail (10), **characterized in that** the fastening devices (30) are slidable along the guide rail (10), and wherein the second end (352) of the heat pipe (35) is connected to a capacitor adapter (36), via which it is coupled to the heat dissipation system (40), and the guide rail (10) has a pressing frame (15), with which an axial force can be applied to the capacitor adapter (36).

2. Sun protection device according to claim 1, **characterized in that** the heat dissipation system (40) is provided with a heat exchanger housing (41), which delimits a fluid space (42) in which a heat exchanger (43) is arranged.

3. Sun protection device according to claim 2, **characterized in that** the capacitor adapter (36) is in contact with the heat exchanger (43) of the heat dissipation system (40) via its end face (361).

4. Sun protection device according to claim 2, **characterized in that** the capacitor adapter (36) has a plurality of contact fingers (362), which are arranged so as to be spaced apart from one another, corresponding contact fingers (432) of the heat exchanger (43) engaging in the intermediate spaces (363) between the contact fingers (362) of the capacitor adapter (36).

5. Sun protection device according to any of claims 2 to 4, **characterized in that** the heat exchanger (43) comprises a bottom plate having a first side and a second side, the first side being adapted to be connected to the heat pipe and the second side carrying at least one cooling fin projecting into the fluid space.

6. Sun protection device according to claim 5, **characterized in that** the cooling fin extends parallel to the direction of flow of the fluid.

7. Sun protection device according to any of claims 1 to 6, **characterized in that** the heat pipe (35) is axially slidable.

8. Sun protection device according to any of claims 1 to 7, **characterized in that** the pressing frame (15) can be moved via at least one lifting element (16) and/or the pressing frame can be moved via at least one spring element (193, 18).

9. Sun protection device according to any of claims 1 to 8, **characterized in that** the capacitor adapter (36) is accommodated in an insulating sleeve (37) having a first longitudinal portion (371) with a first cross-section and a second longitudinal portion (372) with a second cross-section, wherein the first longitudinal portion (371) has a cylindrical outer contour with a first radius and the second longitudinal portion (372) has a cylindrical outer contour with a second radius and at least one flattening (375) or the first longitudinal portion (371) has a cylindrical outer contour with a first radius and at least one flattening (376) and the second longitudinal portion (372) has a polygonal outer contour.

10. Sun protection device according to any of claims 1 to 9, **characterized in that** the lamellas (20) in the fastening devices (30) are pivotable about their longitudinal axis (21).

11. Sun protection device according to claim 9, **characterized in that** a photovoltaic cell is arranged on at least one lamella (20) and both the insulating sleeve (37) and the pressing frame (15) are provided with at least one electrical contact element (377, 151).

12. Sun protection device according to any of claims 1 to 11 further containing two panes (50), wherein the sun protection device is introduced between the panes (50).

13. Sun protection device according to claim 12, **characterized in that** a protective gas or an insulation vacuum is introduced between the panes (50).

14. Sun protection device according to any of claims 1 to 13, **characterized in that** the heat pipe (35) is rotatably received in the lamella (20).

15. Building having a sun protection device according to any of claims 1 to 14.

## Revendications

1. Dispositif de protection solaire (1) comportant un rideau de plusieurs lamelles (20) espacées qui sont maintenues dans des rails de guidage (10) au moyen de dispositifs de fixation associés (30), le dispositif de fixation (30) comportant au moins un tube caloporteur (35) qui présente une première extrémité (351) et une seconde extrémité (352), la première extrémité (351) étant couplée à la lamelle (20) et la seconde extrémité (352) étant susceptible d'être reliée à un système de évacuation de chaleur (40) qui est logé dans le rail de guidage (10),
**caractérisé en ce que**
les dispositifs de fixation (30) sont mobiles en translation le long du rail de guidage (10), et la seconde extrémité (352) du tube caloporteur (35) est reliée à un adaptateur de condenseur (36) par lequel il est couplé au système d'évacuation de chaleur (40), et le rail de guidage (10) comprend un cadre de pressage (15) permettant d'exercer une force axiale sur l'adaptateur de condenseur (36).

2. Dispositif de protection solaire selon la revendication 1,
**caractérisé en ce que**
le système d'évacuation de chaleur (40) est pourvu d'un boîtier échangeur de chaleur (41) qui délimite un espace à fluide (42) dans lequel est agencé un échangeur de chaleur (43).

3. Dispositif de protection solaire selon la revendication 2,
**caractérisé en ce que**
l'adaptateur de condenseur (36) a sa face frontale (361) en contact avec l'échangeur de chaleur (43) du système d'évacuation de chaleur (40).

4. Dispositif de protection solaire selon la revendication 2,
**caractérisé en ce que**
l'adaptateur de condenseur (36) présente une pluralité de doigts de contact (362) qui sont agencés à distance les uns des autres, des doigts de contact (432) correspondant de l'échangeur de chaleur (43) venant s'engager dans les espaces intermédiaires (363) entre les doigts de contact (362) de l'adaptateur de condenseur (36).

5. Dispositif de protection solaire selon l'une des revendications 2 à 4,
**caractérisé en ce que**
l'échangeur de chaleur (43) comprend une plaque de fond ayant une première face et une seconde face, la première face étant conçue pour être reliée au tube caloporteur et la seconde face portant au moins une ailette de refroidissement qui pénètre dans l'espace à fluide.

6. Dispositif de protection solaire selon la revendication 5,
**caractérisé en ce que**
l'ailette de refroidissement s'étend parallèlement à la direction d'écoulement du fluide.

7. Dispositif de protection solaire selon l'une des revendications 1 à 6,
**caractérisé en ce que**
le tube caloporteur (35) est mobile en translation axiale.

8. Dispositif de protection solaire selon l'une des revendications 1 à 7,
**caractérisé en ce que**
le cadre de pressage (15) est mobile par au moins un élément de soulèvement (16) et/ou le cadre de pressage est mobile par au moins un élément à effet ressort (193, 18).

9. Dispositif de protection solaire selon l'une des revendications 1 à 8,
**caractérisé en ce que**
l'adaptateur de condenseur (36) est logé dans une douille d'isolation (37) qui présente une première portion longitudinale (371) ayant une première section transversale et une seconde portion longitudinale (372) ayant une seconde section transversale, la première portion longitudinale (371) présentant un contour extérieur cylindrique ayant un premier rayon et la seconde portion longitudinale (372) présentant un contour extérieur cylindrique ayant un second rayon et au moins un méplat (375), ou la première portion longitudinale (371) présentant un contour extérieur cylindrique ayant un premier rayon et au moins un méplat (376), et la seconde portion longitudinale (372) présentant un contour extérieur polygonal.

10. Dispositif de protection solaire selon l'une des revendications 1 à 9,
**caractérisé en ce que**
les lamelles (20) sont mobiles en pivotement autour de leur axe longitudinal (21) dans les dispositifs de fixation (30).

11. Dispositif de protection solaire selon la revendication 9,
**caractérisé en ce que**
une cellule photovoltaïque est agencée sur au moins une lamelle (20), et aussi bien la douille d'isolation (37) que le cadre de pressage (15) sont pourvus d'au moins un élément de contact électrique (377, 151).

12. Dispositif de protection solaire selon l'une des revendications 1 à 11, comportant en outre deux vitres (50), le dispositif de protection solaire étant monté entre les vitres (50).

13. Dispositif de protection solaire selon la revendication 12,
**caractérisé en ce que**
un gaz de protection ou un vide d'isolation est introduit entre les vitres (50).

14. Dispositif de protection solaire selon l'une des revendications 1 à 13,
**caractérisé en ce que**
le tube caloporteur (35) est logé de façon mobile en rotation dans la lamelle (20).

15. Bâtiment comportant un dispositif de protection solaire selon l'une des revendications 1 à 14.
